# EUROPÄISCHE PATENTSCHRIFT

(11) **EP 0 394 521 B1**
(45) Veröffentlichungstag und Bekanntmachung des Hinweises auf die Patenterteilung: **15.09.1993**
(21) Anmeldenummer: 89107586.3
(22) Anmeldetag: 26.04.1989
(51) Int. Cl.: B27B 5/06, B27B 5/04, B23D 47/04

(54) **Verfahren und Vorrichtung zum Zuschneiden und/oder Besäumen von Werkstücken aus Holz oder dergleichen**
Method and device for cutting up or edging pieces of wood or the like
Procédé et dispositif pour le découpage ou le délignage de pièces de bois ou similaires

(43) Veröffentlichungstag der Anmeldung: 31.10.1990
(73) Patentinhaber: HOMAG ESPANA S.A., E-08480 L'Amettla del Vallès (Barcelona) (ES)
(72) Erfinder: Schuler, Gerhard, Dipl.-Ing., D-7290 Freudenstadt (DE)
(74) Vertreter: Kohlmann, Karl Friedrich, Dipl.-Ing.

(56) Entgegenhaltungen:
- EP-A- 0 080 230
- DE-A- 2 330 475
- DE-A- 2 330 476
- DE-A- 3 004 966
- DE-A- 3 111 256

## Beschreibung

Die Erfindung betrifft ein verfahren und eine Vorrichtung zum Zuschneiden und/oder Besäumen von Werkstücken aus Holz oder dergl. nach dem Oberbegriff des Anspruches 1 bzw. des Anspruches 8.

Für Innenausbaubetriebe wie auch für Möbelhersteller ist es bisher kaum möglich, auf Fixmaßzuschnitte von Plattenherstellern zurückzugreifen, da es aufgrund relativ kleiner Stückzahlen und der steigenden Anforderungen an Individualität für Plattenhersteller nicht interessant ist, derartige Fixmaßzuschnitte zu liefern. Daher findet eine gewisse Rückverlagerung des Plattenzuschnittes in den Innenausbaubetrieb und den Möbelbaubetrieb statt.

Eine weitere Entwicklung ist dadurch gekennezichnet, daß immer mehr beschichtetes Plattenmaterial zum Einsatz kommt. Besonders bei diesem ist es wichtig, daß die Platten ausrißfrei auf Fertigmaß aufgeteilt werden können, da sonst ein zusätzlicher Arbeitsgang notwendig wird.

Das rationelle Plattenaufteilen und ausrißfreie Fertigmaßschneiden ist in kleineren Betrieben, wie Schreinereien oder holzverarbeitenden Handwerksbetrieben mit den derzeit zur Verfügung stehenden Verfahren und Vorrichtungen nur begrenzt möglich.

Der Grund hierfür liegt neben einer mangelnden Vielseitigkeit der bisher zur Verfügung stehenden Vorrichtungen vor allem in deren großen Raumbedarf, der für kleinere Betriebe häufig den hauptsächlichen Hinderungsgrund zum Aufstellen derartiger Vorrichtungen darstellt.

Ein gattungsgemäßes Verfahren und eine gattungsgemäße Vorrichtung, die diese Nachteile aufweist, ist beispielsweise aus der DE-OS 30 04 966 bekannt. Diese Druckschrift beschreibt eine Vorrichtung in Form einer Plattenbesäum- und Aufteilsäge, bei der ein zu bearbeitendes plattenförmiges Werkstück einer hinteren Maschinenseite dem Auflagetisch in Form einer Mehrzahl von Werkstückauflagen zugeführt wird. Von dort aus wird das aufzuteilende plattenförmige Werkstück in Richtung auf den Sägebereich weitergeschoben, wozu ein Breiten- bzw. Queranschlag, der aus einer Mehrzahl von an einer Führungsschiene angebrachten Einzelanschlägen besteht, das plattenförmige Werkstück schrittweise dem Sägeaggregat zuführt, wobei das Werkstück sowohl während der Schubbewegung als auch beim Trennschnitt durch einen Klemmhalter festgehalten wird. Nach Einfahren des Werkstückes in die vorprogrammierte Position bezüglich der Schnittebene wird eine Werkstückspanneinrichtung in Form eines Druckbalkens abgesenkt und der Trennschnitt durchgeführt. Danach liegen die abgetrennten Plattenteile auf Werkstückauflagen, die auf der Bedienerseite angeordnet sind. Von dort aus kann eine Bedienungsperson die abgetrennten Werkstückteile entnehmen und gegebenenfalls einem weiteren Bearbeitungsgang zuführen, bei dem ein Querschnitt durchgeführt wird.

Bedenkt man, daß mit einer derartigen Vorrichtung Platten mit Abmessungen von bis zu einer Länge von 5.600 mm aufgeteilt werden müssen, wird deutlich, welcher Raum für eine derartige Vorrichtung zur Verfügung stehen muß, da zu Beginn des Aufteilvorganges die gesamte aufzuteilende Platte auf der der Bedienseite gegenüberliegenden Seite angeordnet werden muß während die Plattenteile auf der Bedienseite entnommen werden. Daher ist eine derartige Vorrichtung allein schon aus Platzgründen für kleinere Betriebe der holzverarbeitenden Industrie ungeeignet.

Es sind zwar weitere Verfahren und Vorrichtungen, beispielsweise aus der DE-PS 31 11 256, der DE-OS 23 30 475 sowie der DE-AS 23 30 476 bekannt, bei denen die Ein- und Ausgabe der Platten auf derselben Bedienseite erfolgt, jedoch sind diese Vorrichtungen ebenfalls für kleinere Betriebe aufgrund eines sehr großen Platzbedarfes ungeeignet. So ist im Falle der Vorrichtung der DE-PS 31 11 256 auf der der Eingabeseite gegenüberliegenden Seite der Säge ein Schieber vorgesehen, der einen Verfahrweg aufweist, der so groß wie die maximale Plattengröße sein muß, so daß trotz der Anordnung der Ein- und Ausgabe auf derselben Bedienseite ein großer Raumbedarf erforderlich ist.

Bei den beiden anderen Vorrichtungen kann ebenfalls kein Raumgewinn erzielt werden, da es bei diesen Maschinen erforderlich ist, den geschnittenen Plattenstapel in einer Ebene zu schwenken, wofür ebenfalls viel Platz erforderlich ist.

Es ist daher Aufgabe der vorliegenden Erfindung, eine Verfahrensweise und eine Vorrichtung der im Oberbegriff des Anspruches 1 bzw. Anspruches 8 genannten Art zu schaffen, die vielseitig anwendbar sind und insbesondere einen kleinen Raumbedarf aufweisen, wie dies für den Einsatz in kleineren Betrieben erforderlich ist.

Diese Aufgabe wird erfindungsgemäß durch die Merkmale des Anspruches 1 bzw. des Anspruches 8 gelöst.

Das erfindungsgemäße Verfahren macht es möglich, auf platzsparende Art und Weise vor allem die Arbeitsgänge Plattenzuschnitt, Fertigformatschnitt für Plattenteile, Massivholzbesäum- und Breiteschnitt sowie Furnierformat- und Fügeschnitt auszuführen.

Diese Arbeitsgänge werden von der Bedienungsperson sowohl hinsichtlich des Zuführens der noch zu bearbeitenden Werkstücke, als auch hinsichtlich der Entnahme der zugeschnittenen Werkstückteile von ein- und derselben Seite ausgeführt. Erfindungsgemäß werden dabei die Werkstückteile vom Werkstück jeweils auf der in Zuführrichtung vorderen, d.h. auf der der Bedienungsperson abgewandten Seite abgetrennt und im Anschluß daran entgegen der Zuführrichtung über das Werkstück hinweg wieder entnommen. Aufgrund dieser neuartigen Arbeitsweise wird - bezogen auf die Schnittebene - auf der der Zuführseite entgegengesetzten Seite nur relativ wenig Raum benötigt, der darüberhinaus von der Seite her nicht zugänglich sein muß. Der Raumbedarf für nach dem erfindungsgemäßen Verfahren arbeitende Vorrichtungen ist daher relativ gering.

Die neuartige Arbeitsweise hat darüberhinaus den Vorteil, daß bei der Herstellung von Werkstückteilen gleicher Breite die Einstellung des Schnittmaßes nicht verändert werden muß. Dies wiederum erbringt den Vorteil, daß bei einer nach dem erfindungsgemäßen Verfahren arbeitenden Vorrichtung der Anschlag bei der Herstellung von Werkstückteilen gleicher Breite nicht verändert werden muß. Eine derartige Arbeitsweise ist bei bekannten Verfahren nicht möglich, da für jeden Schnitt das Schnittmaß neu eingestellt, d.h. der Anschlag für jeden Schnitt verstellt werden muß.

Das Verfahren bietet darüber hinaus den Vorteil, daß die genannten Arbeitsgänge preisgünstig und bedienerfreundlich ausgeführt werden können, wobei im Bedarfsfalle eine schnelle Umrüstung möglich ist.

Die Ansprüche 2 bis 7 haben vorteilhafte Weiterbildungen des Verfahrens gemäß Anspruch 1 zum Inhalt.

Mit der in Anspruch 8 definierten erfindungsgemäßen Vorrichtung, die insbesondere als reine Plattensäge ausgebildet sein kann, wird zunächst eine vielseitig und damit universell einsatzbare Maschine geschaffen, mit der die zuvor genannten Arbeitsgänge auf platzsparende Art und Weise durchgeführt werden können. Es ergibt sich darüberhinaus der Vorteil, daß die erfindungsgemäße Vorrichtung praktisch vier Maschinen in einem Gerät vereint und damit als raumsparende, preisgünstige, bedienerfreundliche und schnell umrüstbare "Univeralsäge" bezeichnet werden kann.

Neben der oben beschriebenen konzeptionsbedingten Raumersparnis ergibt sich somit eine weitere Raumersparnis aus dem Umstand, daß für die unterschiedlichen Arten von Bearbeitungen nur noch eine Maschine erforderlich ist, während bisher häufig hierfür unterschiedliche Maschinentypen oder -arten, wie Plattenzuschnittsägen Furnierstanzen, Doppelabkürzsägen, Tischkreissägen mit Schiebeschlitten und Schwenkarm oder dergleichen, erforderlich waren.

Ferner ergibt sich bei der erfindungsgemäßen Vorrichtung der Vorteil, daß im Gegensatz zu Doppelabkürzsägen und Tischkreissägen das Werkstück nicht bewegt werden muß, und daß das Sägeblatt während des Schnittvorganges voll abgedeckt ist. Dies führt zu einer Verbesserung der Schnittqualität, zu einer wesentlichen Erhöhung der Unfallsicherheit und zu einer weiteren Platzeinsparung.

Ferner können mit der erfindungsgemäßen Vorrichtung sehr rationell Fertigformatschnitte auch für furnierte und/oder hochempfindliche laminatbeschichtete Teile durchgeführt werden. Hierbei können je nach Werkstückgröße bzw. Werkstückdicke auch mehrere Teile gleichzeitig nebeneinander bzw. übereinander bearbeitet werden.

Bisherige Probleme, die in Schreinereien oft beim Schneiden langer Furnierpakete mit Furnierstanzen aufgrund deren begrenzter Arbeitslänge entstanden sind, können mit der erfindungsgemäßen Vorrichtung ebenfalls ausgeräumt werden, da auch lange Furnierpakete im Bedarfsfalle mit speziellen Sägeblättern aufgeschnitten, besäumt bzw. gefügt werden können.

Ferner können mit der erfindungsgemäßen Vorrichtung Platten mit Ausmaßen von z.B. bis zu 2,7 x 5,6 m bearbeitet werden, wobei bei derartig großformatigen Platten für das Aufteilen das Plattenhandling eine entscheidende Rolle spielt. Mit der erfindungsgemäßen Vorrichtung ist es in vorteilhafter Weise möglich, eine horizontale Platteneinlagerung vorzunehmen, was vor allem für das Beschicken vom LKW aus bzw. das Handhaben mit Gabelstaplern vorteilhaft ist. Hierbei ist für das Beschicken der Lagerregale und das Entnehmen und Zuführen zur Plattensäge die Verwendung einer preisgünstigen Einträger-Hängekrananlage möglich, die beispielsweise über einen Elektrokettenzug und ein Vakuumhebegerät manuell verfahrbar sein kann.

Die Ansprüchen 9 bis 28 beinhalten vorteilhafte Weiterbildungen der erfindungsgemäßen Vorrichtung.

Die Ausbildung der Aushebevorrichtung als Hebeschiene stellt eine besonders einfache Konstruktion dar.

Weist die Aushebevorrichtung als alternative Lösung zumindest einen schwenkbar gelagerten Hebearm auf, ergibt sich ebenfalls der Vorteil einer besonders einfachen Konstruktion, wobei es ferner vorteilhafterweise möglich ist, eine Mehrzahl von derartigen Hebearmen zu einer Rechenanordnung zusammenzufassen, wobei sich dann insbesondere bezüglich der gleichzeitigen Betätigung aller Hebearme über eine einzige Betätigungsvorrichtung Vorteile im Hinblick auf eine Verminderung des Konstruktionsaufwandes ergeben.

Die Verwendung einer bzw. mehrerer Heberollen ergibt vor allem den Vorteil, daß das Herausziehen des abgetrennten Werkstückteiles erleichtert wird.

Weist die Aushebevorrichtugn zur Betätigung der zuvor genannten Aushebeelemente pneumatische oder gegebenenfalls auch hydraulische Aushebezylinder auf, so ergeben sich insbesondere Vorteile im Hinblick darauf, daß derartige Aushebzylinder preisgünstig und einfach zu montieren sind, und daß überdies die für die Betätigung der Aushebzylinder erforderlichen Energiequellen üblicherweise am Aufstellort ohnehin vorhanden sind, so daß vorhandene Installationen genutzt werden können. Dies ergibt insbesondere Kostenvorteile.

Die Bedienung der erfindungsgemäßen Vorrichtung wird durch das Vorsehen einer Ausschiebeeinrichtung erheblich erleichtert. Da bei der erfindungsgemäßen Vorrichtung zur Erreichung einer beträchtlichen Platzersparnis nur von der Vorderseite der Maschine aus gearbeitet wird, liegt nach dem Sägevorgang das abgetrennte Teil zwischen dem Queranschlag und der Säge vor. Daher erhöht sich insbesondere dann die Bedienfreundlichkeit durch Vorsehen einer zusätzlichen Ausschiebeeinrichtung, wenn vor dem abgetrennten Werkstückteil noch zu bearbeitende Werkstückteile vorliegen.

Eine derartige Ausschiebeeinrichtung kann beispielsweise in Form eines Parallelogrammausschiebers ausgebildet werden, der den Queranschlag übergreift und der durch einen Ausschubzylinder betätigt wird.

Es ist jedoch grundsätzlich auch möglich, den Queranschlag als Auschiebeeinrichtung einzusetzen, wozu dann am Anschlagschlitten ein Betätigungselement, vorzugsweise in Form eines Preßluftzylinders, vorzusehen ist, das nach Durchführen des Schnittes den Queranschlag in Richtung der Entnahmeseite vorschiebt, wodurch das angheobene abgetrennte Werkstückteil der Bedienungsperson zugeschoben wird.

Ist der Queranschlag bis unmittelbar an die Schnittebene heranfahrbar ausgebildet, kann insbesondere für den Fertigformatschnitt nachträglich furnierter und beschichteter Spanplattenteile die Durchführung eines Besäumschnittes vor der Formatierung durchgeführt werden. Hierfür ist der Queranschlag bis auf weniger Millimeter an das Sägeblatt heranführbar und er wird so ausgebildet, daß auch Werkstücke mit überstehenden Furnieren oder Beschichtunghsmaterialien bearbeitet werden können.

Bei einer sehr einfachen und deshalb kostengünstigen Ausführung kann die Verstellung über ein Handrad auf der Vorderseite der erfindungsgemäßen Vorrichtung erfolgen. Bei einer noch leichter zu bedienenden Ausführungsform kann hierfür eine elektronische Breitenverstellvorrichtung vorgesehen werden.

Ist der Queranschag als durchgehendes Anschlaglineal ausgebildet, dessen Breite der Maschinenbreite entspricht, ergibt sich der Vorteil, daß auch mehrere einzelne Werkstücke nebeneinander angeordnet und gleichzeitig bearbeitet werden können.

Da ferner der Queranschlag einerseits auch als Ergänzung zu einem zusätzlich vorgesehenen Längsanschlag beim Längenschneiden genutzt werden kann und andererseits jedoch längere Plattenteile auch am Queranschlag vorbeigeschoben werden müssen, ist der Queranschlag vorteilhafterweise so ausgebildet, daß er um vorzugsweise ca. 650 mm einschiebbar bzw. ausziehbar ist. Hierzu kann der Queranschlag vorzugsweise ein teleskopartig ein- bzw. ausziehbares Anschlagteil aufweisen, das überdies in den jeweiligen Ausziehstellungen fixierbar ist.

Da es die erfindungsgemäße Vorrichtung ermöglicht, recht unterschiedliche Arbeitsgänge auszuführen, ist sie vorteilhafterweise zusätzlich zum Haupt-Sägeblatt mit einer Vorritzsäge versehen. Eine derartige Zusatzeinrichtung ermöglicht das Ausführen eines ausrißfreien Schnittes, wozu die Vorritzsäge vorzugsweise ein Übermaß von etwa einem 1/10 mm gegenüber dem Haupt-Sägeblatt hat.

Zur Ausführung von Postformingschnitten kann hierbei die Vorritzsäge hochschwenkbar ausgebildet sein, was eine beträchtliche Verminderung des Aufwandes für eine derartige Zusatzeinrichtung darstellt.

Weist die Werkstückspanneinrichtung ein Niederhalteelement auf, das an einem mittels Preßluftzylinder betätigten Parallelogramm angeordnet ist, ergibt sich zum einen der Vorteil einer einfachen Konstruktion und zum anderen kann mit einer derartigen Anordnung das oder die zu bearbietenden Werkstücke sicher festgespannt werden.

Ist der Auflagetisch als Rollen- oder Luftkissentisch ausgebidlet, ergbibt sich der Vorteil, daß die zu bearbeitenden Werkstücke leicht verschiebbar sind, was die Bedienfreundlichkeit weiter erhöht.

Weitere Bedienerleichterungen ergeben sich durch die Merkmale der Ansprüche 26 und 27.

Ist schließlich eine Schnittlängenverstelleinrichtung zusätzlich vorgesehen, ergibt sich der Vorteil, daß beispielsweise bei kleineren Platten nicht die ganze Arbeitslänge der erfindungsgemäßen Vorrichtung abgefahren werden muß. Vielmehr ist es dann möglich, den Arbeitshub des Sägewagens durch entsprechende Einstellung zu begrenzen, was den Arbeitsvorgang beschleunigt und eine gewisse Energieersparnis ergibt.

Weitere Einzelheiten, Merkmale und Vorteile der Erfindung ergeben sich aus nachfolgender Beschreibung eines Ausführungsbeispieles anhand der Zeichnung.

Es zeigen schematisch:
- Fig. 1: eine Draufsicht auf ein bevorzugtes Ausführungsbeispiel einer erfindungsgemäßen Vorrichtung in Form einer Plattensäge sowie deren Anordnung in einem Arbeitsbereich,
- Fig.2: eine vereinfachte Darstellung einer Seitenansicht der erfindungsgemäßen Vorrichtung gemäß Figur 1.

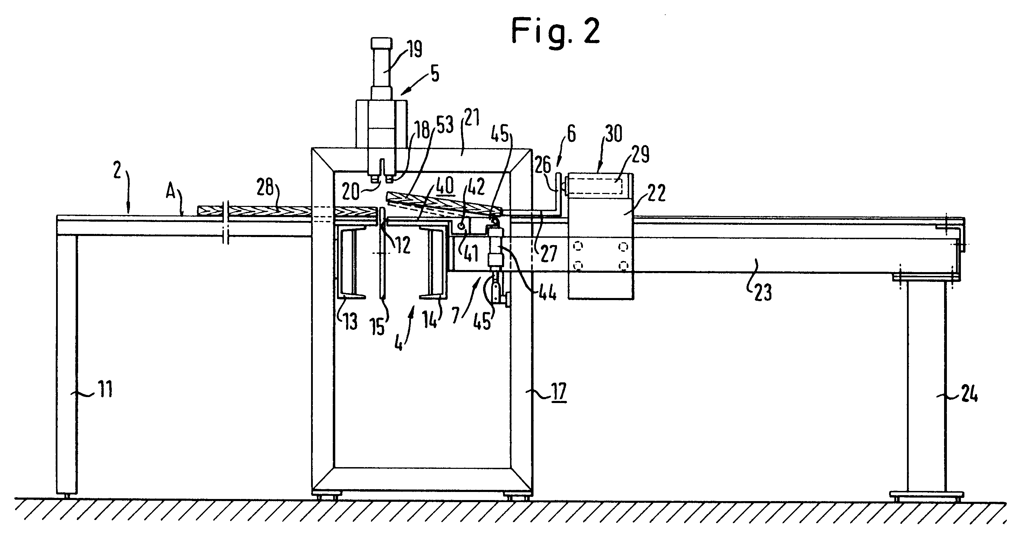

Die Hauptkomponenten der Vorrichtung 1 sind ein Auflagetisch 2, ein Sägetisch 3, ein in Fig. 2 vereinfacht dargestelltes Sägeaggregat 4, eine ebenfalls aus Fig. 2 ersichtliche Werkstückspanneinrichtung 5, ein Queranschlag 6 sowie eine erfindungsgemäß vorgesehene Aushebevorrichtung 7.

Diese und weitere erfindungsgemäße Komponenten der Vorrichtugn 1 werden nachfolgend im Detail beschrieben.

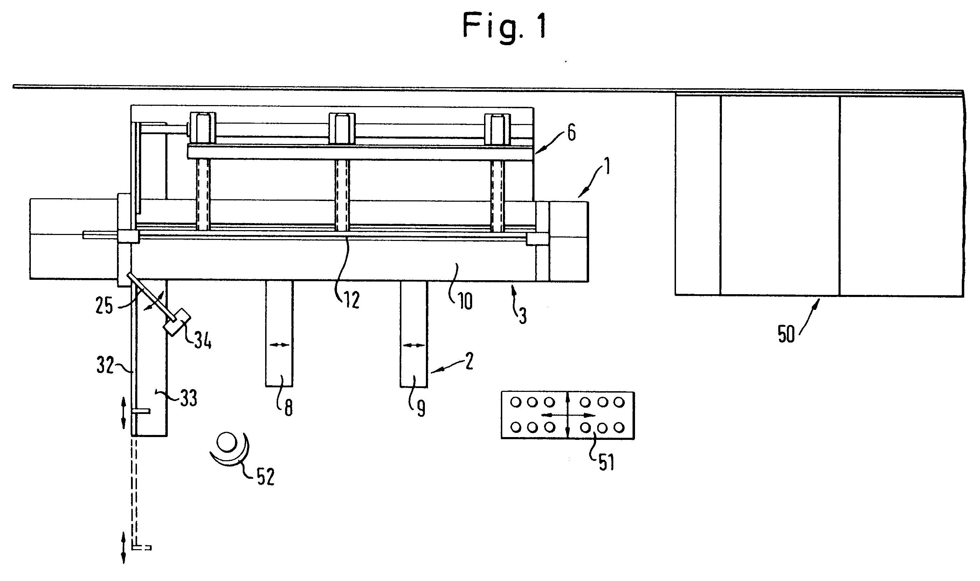

Der Auflagetisch 2 weist bei der in den Fig. 1 und 2 dargestellten Ausführungsform zwei gemäß den Pfeilrichtungen der Fig. 1 verschiebbare Auflagetischteile 8 und 9 auf, deren Oberflächen in einer Ebene liegen und die sich von einem Maschinengehäuse 10 aus in Richtung auf die Bedienseite erstrecken. Jedes der Auflagetischteile weist eine bis zum Boden reichende Stütze auf, die in Fig. 2 mit dem Bezugszeichen 11 gekennzeichnet ist.

Der Sägetisch 3 ist auf der Oberseite des in Fig. 2 zur Vereinfachung der Darstellung nicht näher dargestellten Gehäuses 10 angeordnet und ist mit einem Schlitz 12 versehen, der sich gemäß Fig. 1 über die gesamte Tischbreite des Sägetisches 3 erstreckt.

Unterhalb des Sägetisches 3 ist im Gehäuse 10 das Sägeaggregat 4 angeordnet. Fig. 2 zeigt eine vereinfachte Darstellung des Sägeaggregates 4, das einen nicht näher dargestellten Sägewagen aufweist, der ein Sägeblatt 15 lagert und der entlang einer aus zwei Führungsschienen 13 und 14 bestehenden Führung mit hoher Geschwindigkeit hin- und herbewegbar ist. Zur Vereinfachung der Darstellung sind die wie üblich vorhandenen Antriebs- und Steuereinrichtungen für das Sägeaggregat 4 sowie das diese Komponenten umgebende Gehäuse in Fig. 2 nicht dargestellt. Fig. 2 zeigt einen Grundständer 17, der zur Abstützung des Gehäuses 10 dient und ferner verdeutlicht Fig. 2, daß das Sägeblatt 15 den Schlitz 12 mit seinem außen die Sägezähne aufweisenden Umfang durchgreift.

Die Werkstückspanneinrichtung 5 ist oberhalb des Schlitzes 12 des Sägetisches 3 angeordnet und ist in Fig. 2 in schematisch leicht vereinfachter Darstellung wiedergegeben. Die Werkstückspanneinrichtung 5 weist ein Niederhalteelement 18 auf, das über eine nicht näher dargestellte Führung auf- und abbewegt werden kann, wozu als Betätigungsvorrichtung vorzugsweise ein Preßluftzylinder 19 vorgesehen ist. Ferner verdeutlicht Fig.2, daß das Niederhalteelement 18 einen Aufnahmeschlitz 20 aufweist, dessen Tiefe so bemessen ist, daß bei abgesenktem Niederhalteelement 18 der den Schlitz 12 durchgreifende Umfangsbereich des Sägeblattes 15 vollständig abgedeckt ist. Schließlich zeigt Fig. 2, daß die Werkstückspanneinrichtung 5 bei der dargestellten Ausführungsform an einem oberen Querholm 21 des rahmenartig ausgebildeten Grundständers 17 befestigt ist. Ferner ist hervorzuheben, daß das Niederhalteelement 18 der Werkstückspanneinrichtung 5 ein sich über die gesamte Breite des Sägetisches 3 erstreckendes Bauteil darstellt, so daß das Sägeblatt 15 über seinen gesamten Verfahrweg entlang des Schlitzes 12 bei abgesenktem Niederhalteelement 18 abgedeckt ist.

Aus Fig. 2 ist ferner ersichtlich, daß der Queranschlag 6 gegenüber dem Auflagetisch 2 auf der anderen Seite des Sägetisches 3 angeordnet ist. Im einzelnen weist der Queranschlag 6 einen Anschlagschlitten 22 auf, der auf einer Schlittenführung 23 verfahrbar ist, die an ihrem dem Sägetisch 3 abgewandten Ende über eine Stütze 24 gegenüber dem Boden abgestützt ist. Aus Gründen der Vereinfachung der Darstellung sind der Antrieb und die erforderlichen Steuereinrichtungen des Anschlagschlittens 22 nicht dargestellt. In Fig. 1 ist jedoch schematisch vereinfacht ein Schaltpult 34 dargestellt, das über einen Schwenkarm 25 am Gehäuse 10 angebracht ist und von dem aus die gesamte Vorrichtung 1 und damit auch der Anschlagschlitten von der Bedienseite her betätigt werden kann.

Eine Zusammenschau der Fig. 1 und 2 macht ferner deutlich, daß der Queranschlag 6 im Beispielsfalle als ein über die gesamte Vorrichtungsbreite sich erstreckendes durchgehendes Anschlaglineal ausgebildet ist, das in Form eines L-förmigen Winkels mit zwei im rechten Winkel zueinander angeordneten Schenkeln 26 und 27 vorliegt. Hierbei erstreckt sich der Schenkel 27 parallel zur Auflageebene A für das Werkstück 28, während sich der am Schenkel 27 einstückig angeformte Schenkel 26 von der Aulfageebene A aus senkrecht nach oben erstreckt und mit einem Ausschiebezylinder 29 einer in ihrer Gesamtheit mit dem Bezugszeichen 30 bezeichneten Ausschiebeeinrichtung verbunden ist. Die Funktionsweise dieser Ausschiebeeinrichtung 30 wird nachfolgend näher erläutert werden, wobei an dieser Stelle angemerkt sei, daß bei der in Fig. 2 dargestellten Ausführungsform das Anschlaglineal des Queranschlages 6 gleichzeitig das Ausschiebeelement der Ausschiebeeinrichtung 30 bildet.

Auf der in Fig. 1 dargestellten linken Seite ist die Vorrichtung 1 ferner mit einem Längsanschlag 32 ausgestattet, der mit einer Auflagefläche 33 kombiniert ist. Wie die gestrichelte Linie in Fig. 1 zeigt, ist der Längsanschlag 32 ausziehbar, wobei sich die Auszieheinrichtung aus den beiden dem Längsanschlag 32 zugeordneten Doppelpfeilen ergibt. Der Längsanschlag 32 dient zum Ausführen von Querschnitten von Werkstückteilen, die zuvor mittels des Sägeaggregates 4 unterteilt worden sind.

Eine weitere besonders wichtige Komponente der erfindungsgemäßen Vorrichtung 1 stellt die zuvor bereits erwähnte Aushebevorrichtung 7 dar, die in Bezug auf den Schlitz 122 des Sägetisches 3 auf der der Bedienseite gegenüberliegenden Seite der Vorrichtung 1 angeordnet ist. Bei den in Figur 2 dargestellten Ausführungsformen der erfindungsgemäßen Vorrichtung 1 weist die Aushebevorrichtung 7 eine Vielzahl von nebeneinander angeordneten Hebearmen 40 auf, die in Ausnehmungen des Sägetisches 3 angeordnet sind.

Aus der Darstellung der Figur 2 geht hervor, daß jeder der Hebearme 40 mit einem Lagerabschnitt 41 verbunden ist. Der Lagerabschnitt 41 ist mit einer Ausnehmung versehen, durch die ein Schwenkzapfen oder eine Schwenkwelle 42 hindurchragt. Der Schwenkzapfen 42 ist in geeigneter Weise im Sägetisch bzw. dem darunter liegenden Gehäusebereich befestigt. An den Lagerabschnitt 41 schließt sich ein Anschlußteil 43 an, das mit einem vorzugsweise pneumatisch betätigten Aushebezylinder 44 verbunden ist. Bei der dargestellten Ausführungsform ist die Kolbenstange 45 des Aushebezylinders 44 an einer Strebe des Grundständers 17 befestigt. Die Anschlüsse an die Druckluftversorgung sind in Fig. 2 nicht dargestellt.

Die Hebearme 40 der Aushebevorrichtung 7 bilden bei der dargestellten Ausführungsform eine Art Rechenanordnung , so daß die Betätigung des Aushebezylinders 44 bewirkt, daß alle Aushebearme von einer in die Tisch- bzw. Auflageebene (A) abgesenkten Stellung in eine Stellung bewegt werden können, die in Fig. 2 strichliert angedeutet ist und in der die Hebearme 40 aus der Tisch- bzw. Auflageebene (A) herausgeschwenkt sind.

Nachfolgend wird das erfindungsgemäße Verfahren unter Bezugnehme auf die in den Fig. 1 und 2 beschriebene erfindungsgemäße Vorrichtung 1 erläutert:

Bei der in Fig. 1 schematisch vereinfacht dargestellten möglichen Anordnung der Vorrichtung 1 in einer Schreinerei, ist neben der Vorrichtung 1 ein Plattenstapel 50 angeordnet. Der Plattenstapel 50 weist horizontal übereinanderliegende zu bearbeitende Platten auf, die mittels eines in Fig. 1 schematisch angedeuteten Saughebels 51 dem Auflagetisch 2 der Vorrichtung 1 zugeführt werden können. Die Bedienseite der Vorrichtung 1 ist die Seite, auf der eine Bedienperson 52 angedeutet ist, die nach dem Auflegen eines Werkstückes, beispielsweise in Form einer dem Plattenstapel 50 entnommenen Platte, die Vorrichtung 1 zum Ausführen von Schnitten einstellt. Diese Einstellung erfolgt durch Betätigung des Schaltpultes 34. Häufig wird zunächst ein Besäumschnitt durchgeführt. Zu diesem Zwecke wird der Anschlagschlitten 22 bzw. der an ihm angeordnete Queranschlag 6 in unmittelbarer Nähe des Spaltes 12 des Sägetisches 3 verfahren. Auf diese Art und Weise wird die Vorderkante des Schenkels 27 bis auf wenige Millimeter an den Schlitz 12 herangeführt. Danach wird die auf den Auflagetisch 2 aufgelegte Platte auf den Sägetisch 3 geschoben, wobei die in Einschubrichtung vordere Kante des Werkstückes in Anlage an den vorderen Rand des Schenkels 27 des Queranschlages 6 gebracht wird. Danach wird die Werkstückspanneinrichtung 5 betätigt, so daß das ausgerichtete Werkstück auf dem Sägetisch 3 festgelegt ist. Danach wird das Sägeaggregat 4 betätigt, wobei das Sägeblatt 15 über die gesamte Tischbreite des Sägetisches 3 bewegt wird und dabei einen Besäumschnitt ausführt, bei dem ein wenige Millimeter breiter Werkstückstreifen vom Werkstück 28 abgetrennt wird.

Das Ausführen eines derartigen Besäumschnittes erbringt den Vorteil, daß eine absolut gerade Bezugskante geschaffen wird, die für die Maßgenauigkeit der von der Platte im Anschluß daran abzutrennenden Plattenteile erforderlich ist.

Nach dem Ausführen des Besäumschnittes wird der Anschlagschlitten 22 in eine Position verfahren, die dem Maß entspricht, welches das vom Werkstück 28 abzutrennende Werkstückteil haben soll, das in Fig. 2 mit dem Bezugszeichen 53 bezeichnet ist. Nach dem einstellen des Anschlagschlittens 22 - und damit dem Positionieren des Queranschlages 6 - wird das Werkstück 28 bis zur Anlage an die vordere Kante des Schenkels 27 auf den Sägetisch 3 geschoben, wobei zuvor das Niederhalteelement 18 der Werkstückspanneinrichtung 3 angehoben worden ist. Nach Anlegen des Werkstückes 28 an dem Queranschlag 6 wird wiederum die Werkstückspanneinrichtung 5 betätigt, so daß das Werkstück 28 auf dem Sägetisch 3 festgelegt ist.

Danach wird das Sägeaggregat 4 betätigt, wodurch das Werkstückteil 53 vom Werkstück 28 abgetrennt wird.

Um das Werkstück- bzw Plattenteil 53 nach der Betätigung des Sägeaggregates 4 aus der Vorrichtung 1 entnehmen zu können, wird zunächst die Werkstückspanneinrichtung 5 gelöst. Danach wird die Aushebevorrichtung 7 mit Hilfe des Aushebezylinders 44 betätigt, wodurch die Aushebearme 40 aus den Ausnehmungen des Sägetisches 3 in die in Fig. 2 gestrichelte Stellung angehoben werden. Hierzu wird die Kolbenstange 45 eingefahren, so daß die Hebearme 40 um den Drehzapfen 42 in die gestrichelt gezeigte Stellung geschwenkt werden. Das vom Werkstück 28 abgetrennte Werkstückteil 53 wird durch die Betätigung der Aushebevorrichtung 7 ebenfalls über die Auflageebene (A) angehoben, was sich aus der Darstellung der Fig. 2 ergibt. In dieser Stellung kann das abgetrennte Werkstückteil 53 bereits der Vorrichtung 1 entnommen werden. Diese weist jedoch als eine besonders bevorzugte Ausführungsform zusätzlich die Ausschiebeeinrichtung 30 auf. Diese kann ebenfalls vom Schaltpult 34 aus oder automatisch betätigt werden, wodurch der Preßluftzylinder 29 ausgefahren wird, der dadurch über den Schenkel 26 den Schenkel 27 des Queranschlages 6 in Richtung auf den Schlitz 12 zu verschiebt. Da das Werkstückteil 53 am Schenkel 27 anliegt, wird dieses über den Schlitz 12 in Richtung auf die Bedienseite zur Bedienungsperson 52 hingeschoben, so daß es über dem noch zu bearbeitenden Werkstück 28 zu liegen kommt. Aus dieser Stellung heraus kann die Bedienperson 52 das bereits abgetrennte Werkstück 53 auf einfache und gefahrlose Weise der Vorrichtung 1 entnehmen und zu einer eventuellen weiteren Bearbeitung ablegen.

Wenn das bereits abgetrennte Werkstückteil 53 der Vorrichtung 1 entnommen worden ist, kann der zuvor beschriebene Vorgang zum Abtrennen eines weiteren Werkstückteiles vom verbliebenen Werkstück 28 wiederholt werden, bis die Aufteilung des Werkstückes 28 endgültig beendet ist.

Diese Beschreibung macht deutlich, daß bei der erfindungsgemäßen Vorrichtung 1 erstmalig ausschließlich von der Bedienseite her zugeführt und entnommen wird, was eine beträchtliche Platzersparnis mit sich bringt. Darüber hinaus ist die Bedienung einfach und unfallsicher und kann auch bei beengten Platzverhältnissen in kleinen Betrieben, wie beispielsweise Schreinereien durchgeführt werden.

## Patentansprüche

1. Verfahren zum Zuschneiden und/oder Besäumen von Werkstücken (28) aus Holz oder dergleichen, insbesondere Platten, Massivholzstücken oder Werkstücken aus Furniermaterial, bei dem folgende Verfahrensschritte ausgeführt werden:
- Einschieben des Werkstückes (28) von einer Bedienseite her über eine Schnittebene hinweg bis an einen hinter der Schnittebene liegenden Queranschlag (6) zum Einstellen des Schnittmaßes
- Festspannen des Werkstückes (28) in dieser Position
- Ausführen des Schnittes in der Schnittebene
**gekennzeichnet** durch folgende Vefahrensschritte:
- Anheben des abgetrennten, zwischen Schnittebene und Anschlag liegenden Werkstückteiles (53) über dessen Auflageebene (A),
- Rückführen des angehobenen Werkstückteiles (53) über die Schnittebene hinweg und Entnehmen des Werkstückteiles (53) von der Bedienseite her.

2. Verfahren nach Anspruch 1,
**gekennzeichnet**, durch den Verfahrensschritt des Zurückschiebens des abgetrennten angehobenen Werkstückteils (53) in Entnahmerichtung entgegen der Zuführrichtung.

3. Verfahren nach Anspruch 1 oder 2,
dadurch **gekennzeichnet**, daß das abgetrennte Werkstückteil (53) zur Entnahme auf der in Entnahmerichtung vorderen Seite über die Ebene der Werkstückoberseite angehoben wird.

4. Verfahren nach einem der Ansprüche 1 bis 3,
dadurch **gekennzeichnet**, daß vor dem Abtrennvorgang ein Besäumschnitt durchgeführt wird.

5. Verfahren nach einem der Ansprüche 1 bis 4,
dadurch **gekennzeichnet**, daß vor dem Abtrennschnitt ein Vorritzschnitt ausgeführt wird.

6. Verfahren nach einem der Ansprüche 1 bis 5,
dadurch **gekennzeichnet**, daß zur Bearbeitung kleiner bzw. schmaler Werkstücke (28) eine Schnittlängenverstellung ausgeführt wird.

7. Verfahren nach einem der Ansprüche 1 bis 6,
dadurch **gekennzeichnet**, daß die Werkstücke (28) in horizontaler Lage zugeführt werden.

8. Vorrichtung (1) zum Zuschneiden und/oder Besäumen von Werkstücken (28) aus Holz oder dergleichen, insbesondere Plattensäge,
- mit einem Auflagetisch (2),
- mit einem Sägetisch (3),
an dessen einer Seite der Auflagetisch (2) angeordnet ist, und
der mit einem über die gesamte Tischbreite verlaufenden Schlitz (12) versehen ist;
- mit einem Sägeaggregat (4),
das zumindest ein entlang einer Führung (13, 14) über die gesamte Tischbreite bewegbares Sägeblatt (15) aufweist, das in einem Sägewagen angeordnet ist,
wobei das Sägeblatt (15) mit seinem äußeren Rand den Schlitz (12) durchgreift,
- mit einer Werkstückspanneinrichtung (5),
die oberhalb des Schlitzes (12) des Sägetisches (3) angeordnet ist; und
- mit einem Queranschlag (6),
der gegenüber dem Auflagetisch (2) auf der anderen Seite des Sägetisches (3) auf einem entlang einer Schlittenführung (23) verfahrbaren Anschlagschlitten (22) angeordnet ist;
dadurch **gekennzeichnet**,
- daß der Sägetisch (3) eine Aushebevorrichtung (7) für das zwischen Queranschlag und Schnittebene liegende, abgetrennte Werkstückteil (53) aufweist, die zwischen einer in die Tisch- bzw. Auf lageebene (A) abgesenkten Stellung und einer aus der Tisch- bzw. Auflageebene (A) herausragenden Stellung bewegbar ist, und
- daß eine Ausschiebeeinrichtung (30) für das abgetrennte und angehobene Werkstückteil (53) vorgesehen ist.

9. Vorrichtung (1) nach Anspruch 8,
dadurch **gekennzeichnet**, daß die Aushebevorrichtung (7) eine Hebeschiene aufweist.

10. Vorrichtung (1) nach Anspruch 8,
dadurch **gekennzeichnet**, daß die Aushebevorrichtung (7) zumindest einen schwenkbar gelagerten Hebearm (40) aufweist.

11. Vorrichtung (1) nach Anspruch 10,
dadurch **gekennzeichnet**, daß die Aushebevorrichtung (7) eine Mehrzahl von zu einer Rechenanordnung zusammengefaßten Hebearmen (40) aufweist.

12. Vorrichtung (1) nach Anspruch 8,
dadurch **gekennzeichnet**, daß die Aushebevorrichtung (7) zumindest eine Heberolle aufweist.

13. Vorrichtung (1) nach einem der Ansprüche 8 bis 12, dadurch **gekennzeichnet**, daß die Aushebevorrichtung (7) ferner zumindest einen pneumatisch oder hydraulisch betätigbaren Aushebezylinder (44) aufweist, der zum Schwenken bzw. Anheben an den Hebearmen (40) bzw. den Heberollen angreift.

14. Vorrichtung (1) nach Anspruch 8,
dadurch **gekennzeichnet**, daß die Ausschiebeeinrichtung (30) einen am Anschlagschlitten (22) angeordneten pneumatisch oder hydraulisch betätigbaren Ausschiebezylinder (29) aufweist, der Ausschiebeelemente betätigt.

15. Vorrichtung (1) nach einem der Ansprüche 8 bis 14,
dadurch **gekennzeichnet**, daß der Anschlag (6) als durchgehendes Anschlaglineal ausgebildet ist.

16. Vorrichtung (1) nach Anspruch 15,
dadurch **gekennzeichnet**, daß das Anschlaglineal (6) gleichzeitig das Auschiebeelement bildet.

17. Vorrichtung (1) nach einem der Ansprüche 8 bis 16,
dadurch **gekennzeichnet**, daß der Queranschlag (6) bis unmittelbar an den Schlitz (12) des Sägetisches (3) heranfahrbar ist.

18. Vorrichtung (1) nach einem der Ansprüche 8 bis 17,
dadurch **gekennzeichnet**, daß das Verstellmaß des Queranschlages (6) vorzugsweise 1.100 mm, insbesondere 800 mm, beträgt.

19. Vorrichtung (1) nach einem der Ansprüche 8 bis 18,
dadurch **gekennzeichnet**, daß das Sägeaggregat (4) zusätzlich zum Sägeblatt (15) eine Vorritzsäge aufweist.

20. Vorrichtung (1) nach Anspruch 19,
dadurch **gekennzeichnet**, daß die Vorritzsäge etwas Übermaß zum Sägeblatt (15), vorzugsweise etwa 1/10 mm aufweist.

21. Vorrichtung (1) nach einem der Ansprüche 8 bis 20,
dadurch **gekennzeichnet**, daß das Sägeblatt (15) vorzugsweise bis zu 45° schwenkbar ist.

22. Vorrichtung (1) nach einem der Ansprüche 8 bis 21,
dadurch **gekennzeichnet**, daß das Sägeaggregat (4) ferner eine Einrichtung zur Ausführung von Postformingschnitten aufweist.

23. Vorrichtung (1) nach einem der Ansprüche 19 bis 22,
dadurch **gekennzeichnet**, daß die Vorritzsäge als Postformingschnitteinrichtung durch Hochschwenken verwendbar ist.

24. Vorrichtung (1) nach einem der Ansprüche 8 bis 23,
dadurch **gekennzeichnet**, daß die Werkstückspanneinrichtung (5) eine mittels eines Preßluftzylinders (19) betätigbare Führung aufweist, die mit einem Niederhalteelement (18) versehen ist.

25. Vorrichtung (1) nach einem der Ansprüche 8 bis 24,
dadurch **gekennzeichnet**, daß der Auflagetisch (2) als Rollen- oder Luftkissentisch ausgebildet ist.

26. Vorrichtung (1) nach einem der Ansprüche 8 bis 25,
dadurch **gekennzeichnet**, daß der Auflagetisch (2) seitlich verschiebbar ist und von zumindest zwei separaten Auflagetischteilen (8, 9) gebildet ist.

27. Vorrichtung (1) nach einem der Ansprüche 8 bis 26,
dadurch **gekennzeichnet**, daß der Auflagetisch (2) fahrbar ist.

28. Vorrichtung (1) nach einem der Ansprüche 8 bis 27,
dadurch **gekennzeichnet**, daß eine Schnittlängenverstelleinrichtung für das Sägeaggregat (4) vorgesehen ist.

## Claims

1. Method for cutting to size and/or trimming workpieces (28) of wood or the like, in particular boards, solid wood pieces or workpieces of veneer material, in which the following method steps are carried out:
- inserting the workpiece (28) from a delivery side past a cutting plane up to a transverse stop (6) lying behind the cutting plane to set the cutting dimension,
- securely fixing the workpiece (28) in this postition,
- carrying out the cut in the cutting plane,
**characterized** by the following method steps:
- lifting the separated workpiece part (53) lying between the cutting plane and the stop above its support surface (A),
- returning the lifted workpiece part (53) back over the cutting plane and removing the workpiece part (53) from the delivery side.

2. Method according to claim 1, **characterized** by the process step of pushing back the separated lifted workpiece part (53) in the removing direction opposite to the delivery direction.

3. Method according to claim 1 or 2,
**characterized** in that for removal, the separated workpiece part (53) is lifted for removal at the front side in the removal direction above the plane of the workpiece upper surface.

4. Method according to one of the claims 1 to 3,
**characterized** in that a trimming cut is carried out before the separating step.

5. Method according to one of the claims 1 to 4,
**characterized** in that a pre-notching cut is carried out before the separating cut.

6. Method according to one of the claims 1 to 5,
**characterized** in that a cutting length adjustment of the cut is carried out for processing small or narrow workpieces (28).

7. Method according to one of the claims 1 to 6,
**characterized** in that the workpieces (28) are fed in a horizontal position.

8. Apparatus for cutting to size and/or trimming workpieces (28) of wood or the like, in particular a board saw, comprising
- a support table (2),
- a saw table (3)
at the one side of which the support table (2) is arranged, and
which is provided with a slit (12) extending over the entire width of the table;
- a saw unit (4),
which has at least one saw blade (15) movable along a guide (13, 14) across the entire width of the table and arranged in a saw carriage,
the saw blade (15) penetrating the slit (12) with its outer edge,
- a workpiece clamping device (5),
which is arranged above the slit (12) of the saw table (3); and
- a transverse stop (6)
which is arranged on the other side of the saw table (3) opposite to the support table (2) on a stop carriage (22) movable along a carriage guide (23);
**characterized** in that
- the saw table (3) has a lifting apparatus (7) for the separated workpiece part (53), the lifting apparatus lying between the transverse stop and the cutting plane and being movable between a position lowered into the table or the support plane (A) and a position projecting out of the table or support plane (A), and
- a pushing-out device (30) is provided for the separated and lifted workpiece part (53).

9. Apparatus (1) according to claim 8,
**characterized** in that the lifting apparatus (7) has a lifting rail.

10. Apparatus (1) according claim 8,
**characterized** in that the lifting apparatus (7) has at least one pivotably supported lifting arm (40).

11. Apparatus (1) according to claim 10,
**characterized** in that the lifting apparatus (7) has a plurality of lifting arms (40) combined with one another into a calculating arrangement.

12. Apparatus (1) according to claim 8,
**characterized** in that the lifting apparatus (7) has at least one lifting roll.

13. Apparatus (1) according to one of the claims 8 to 12,
**characterized** in that the lifting apparatus (7) also has at least one pneumatically or hydraulically actuatable lifting cylinder (44) which engages the lifting arms (40) or the lifting rollers for pivoting or lifting.

14. Apparatus (1) according to claim 8,
**characterized** in that the pushing-out device (30) has a pneumatically or hydraulically actuatable pushing-out cylinder (29) which is arranged on the stop carriage (22) and activates pushing-out members.

15. Apparatus (1) according to one of the claims 8 to 14,
**characterized** in that the stop (6) is a continuous stop ruler.

16. Apparatus (1) according to claim 15,
**characterized** in that the stop ruler (6) is simultanously the pushing-out member.

17. Apparatus (1) according to one of the claims 8 to 16,
**characterized** in that the transverse stop (6) is movable directly up to the slit 12 of the saw table (3).

18. Apparatus (1) according to one of the claims 8 to 17,
**characterized** in that the adjustment range of the transverse stop (6) is preferably 1.100 mm, in particular 800 mm.

19. Apparatus (1) according to one of the claims 8 to 18,
**characterized** in that the saw unit (4) has a pre-notching saw in addition to the saw blade (15).

20. Apparatus (1) according to claim 19,
**characterized** in that the pre-notching saw is somewhat oversized with respect to the saw blade (15), preferably by approximately 1/10 mm.

21. Apparatus (1) according to one of the claims 8 to 20,
**characterized** in that the saw blade (15) is preferably pivotable about up to 45°.

22. Apparatus (1) according to one of the claims 8 to 21,
**characterized** in that the saw unit (4) additionally includes a device for carrying out post-forming cuts.

23. Apparatus (1) according to one of the claims 19 to 22,
**characterized** in that the pre-notching saw is usable as a post-forming cutting device by the pivoting upwards thereof.

24. Apparatus (1) according to one of the claims 8 to 23,
**characterized** in that the workpiece clamping device (5) has a guide actuatable by means of a pressurized air cylinder (19), the guide being provided with a holding-down member (18).

25. Apparatus (1) according to one of the claims 8 to 24,
**characterized** in that the support table (2) is formed as a roller or air-cushion table.

26. Apparatus (1) according to one of the claims 8 to 25,
**characterized** in that the support table (2) is laterally displaceable and formed of at least two separate support table sections (8, 9).

27. Apparatus (1) according to one of the claims 8 to 26,
**characterized** in that the support table (2) is drivable.

28. Apparatus (1) according to one of the claims 8 to 27,
**characterized** in that a cutting length adjustment device is provided for the saw unit (4).

## Revendications

1. Procédé permettant le découpage et/ou le délignage de pièces de bois (28) ou analogues, notamment de plateaux, pièces en bois massif ou pièces en matériau de placage, selon lequel les opérations suivantes de procédé sont exécutées:
- introduction de la pièce (28) du côté de service, au-delà d'un plan de coupe et jusqu'à une butée transversale (6) située derrière le plan de coupe, de façon à déterminer la dimension de coupe,
- serrage de la pièce (28) dans cette position et
- exécution de la coupe dans le plan de coupe,
caractérisé par les opérations suivantes de procédé :
- soulèvement du morceau de pièce (53) séparé, situé entre le plan de coupe et la butée, au-dessus du plan d'appui (A) de ce morceau de pièce et
- retour du morceau de pièce (53) soulevé, au-dessus du plan de coupe, et extraction du morceau de pièce (53) du côté de service.

2. Procédé suivant la revendication 1, caractérisé par l'opération de procédé constituée par le recul du morceau de pièce (53) séparé et soulevé, dans un sens d'extraction opposé au sens d'amenée.

3. Procédé suivant l'une des revendications 1 et 2, caractérisé en ce que, pour l'extraction du côté qui est situé à l'avant dans le sens d'extraction, le morceau de pièce (53) séparé est soulevé au-dessus du plan de la face supérieure de la pièce.

4. Procédé suivant l'une des revendications 1 à 3, caractérisé en ce qu'un délignage est exécuté avant l'opération de séparation.

5. Procédé suivant l'une des revendications 1 à 4, caractérisé en ce qu'une opération d'entaillage préalable est exécutée avant l'opération de séparation.

6. Procédé suivant l'une des revendications 1 à 5, caractérisé en ce que, pour le traitement de pièces (28) petites ou étroites, il est réalisé un réglage de longueur de coupe.

7. Procédé suivant l'une des revendications 1 à 6, caractérisé en ce que les pièces (28) sont amenées en position horizontale.

8. Machine (1) permettant le découpage et/ou le délignage de pièces de bois (28) ou analogues, notamment soie à plateaux, comprenant :
- une table d'appui (2),
- une table de sciage (3), sur l'un des côtés de laquelle la table d'appui (2) est disposée et qui comporte une fente (12) s'étendant sur toute la largeur de la table,
- un ensemble de sciage (4), qui comprend au moins une lame de scie circulaire (15) agencée de façon à pouvoir être déplacée le long d'un guidage (13, 14) sur toute la largeur de la table, en étant disposée dans un chariot de scie, cette lame de scie circulaire (15) traversant la fente (12) par son bord extérieur,
- un dispositif de serrage de pièce (5), qui est disposé au-dessus de la fente (12) de la table de sciage (3), et
- une butée transversale (6) qui est disposée du côté de la table de sciage (3) situé à l'opposé de la table d'appui (2) et qui est montée sur un coulisseau de butée (22) agencé de façon à pouvoir être déplacé le long d'une glissière de coulisseau (23),
caractérisée en ce que :
- la table de sciage (3) comporte un dispositif de soulèvement (7) pour le morceau de pièce (53) séparé, situé entre la butée transversale et le plan de coupe, ce dispositif de soulèvement étant agencé de façon à pouvoir être déplacé entre une position abaissée dans le plan de table ou plan d'appui (A) et une position en saillie par rapport à ce plan de table ou plan d'appui (A), et :
- en ce qu'il est prévu un dispositif d'expulsion (30) pour le morceau de pièce (53) séparé et soulevé.

9. Machine (1) suivant la revendication 8, caractérisée en ce que le dispositif de soulèvement (7) comprend un rail de soulèvement.

10. Machine (1) suivant la revendication 8, caractérisée en ce que le dispositif de soulèvement (7) comprend au moins un bras de soulèvement (40) monté pivotant.

11. Machine (1) suivant la revendication 10, caractérisée en ce que le dispositif de soulèvement (7) comprend plusieurs bras de soulèvement (40) assemblés suivant un agencement en râteau.

12. Machine (1) suivant la revendication 8, caractérisée en ce que le dispositif de soulèvement (7) comprend au moins un rouleau de soulèvement.

13. Machine (1) suivant l'une des revendications 8 à 12, caractérisée en ce que le dispositif de soulèvement (7) comprend en outre au moins un vérin de soulèvement (44), à actionnement pneumatique ou hydraulique, qui agit sur les bras de soulèvement (40) ou les rouleaux de soulèvement, respectivement en vue de les faire pivoter ou de les soulever.

14. Machine (1) suivant la revendication 8, caractérisée en ce que le dispositif d'expulsion (30) comprend un vérin d'expulsion (29), à actionnement pneumatique ou hydraulique, qui est disposé sur le coulisseau de butée (22) et qui actionne des éléments d'expulsion.

15. Machine (1) suivant l'une des revendications 8 à 14, caractérisée en ce que la butée (6) est réalisée sous la forme d'une butée rectiligne continue.

16. Machine (1) suivant la revendication 15, caractérisée en ce que la butée rectiligne (6) constitue en même temps l'élément d'expulsion.

17. Machine (1) suivant l'une des revendications 8 à 16, caractérisée en ce que la butée transversale (6) est mobile directement jusqu'à la fente (12) de la table de sciage (3).

18. Machine (1) suivant l'une des revendications 8 à 17, caractérisée en ce que la dimension de réglage de position de la butée transversale (6) est de préférence égale à 1 100 mm, notamment à 800 mm.

19. Machine (1) suivant l'une des revendications 8 à 18, caractérisée en ce qu'en plus de la lame de scie circulaire (15), l'ensemble de sciage (4) comprend une scie d'entaillage préalable.

20. Machine (1) suivant la revendication 19, caractérisée en ce que la scie d'entaillage préalable possède un léger excès de dimension, de préférence de 1/10 mm environ, par rapport à la lame de scie circulaire (15).

21. Machine (1) suivant l'une des revendications 8 à 20, caractérisée en ce que la lame de scie circulaire (15) est agencée de façon à pouvoir être inclinée de préférence jusqu'à 45°.

22. Machine (1) suivant l'une des revendications 8 à 21, caractérisée en ce que l'ensemble de sciage (4) comprend en outre un dispositif permettant d'exécuter des coupes d'après-mise en forme.

23. Machine (1) suivant l'une des revendications 19 à 22, caractérisée en ce que la scie d'entaille préalable est agencée de façon à pouvoir être utilisée, par basculement vers le haut, en tant que dispositif de coupe d'après-mise en forme.

24. Machine (1) suivant l'une des revendications 8 à 23, caractérisé en ce que le dispositif de serrage de pièce (5) comprend un guidage qui est agencé de façon à pouvoir être actionné au moyen d'un vérin à air comprimé (19) et qui est pourvu d'un élément presseur (18).

25. Machine (1) suivant l'une des revendications 8 à 24, caractérisée en ce que la table d'appui (2) est réalisée sous la forme d'une table à rouleaux ou d'une table à coussin d'air.

26. Machine (1) suivant l'une des revendications 8 à 25, caractérisée en ce que la table d'appui (2) est agencée de façon à pouvoir être déplacée transversalement en translation et est formée d'au moins deux parties séparées de table d'appui (8, 9).

27. Machine (1) suivant l'une des revendications 8 à 26, caractérisée en ce que la table d'appui (2) est mobile sur roues.

28. Machine (1) suivant l'une des revendications 8 à 27, caractérisée en ce qu'il est prévu un dispositif de réglage de longueur de coupe pour l'ensemble de sciage (4).
